(19) **Europäisches Patentamt**
**European Patent Office**
**Office européen des brevets**

(11) **EP 1 892 847 B1**

(12) **EUROPEAN PATENT SPECIFICATION**

(45) Date of publication and mention
of the grant of the patent:
**20.10.2010 Bulletin 2010/42**

(51) Int Cl.:
***H04B 7/005*** (2006.01)  ***H04B 17/00*** (2006.01)

(21) Application number: **07016579.0**

(22) Date of filing: **23.08.2007**

(54) **A method and apparatus for adjusting transmission power of pilot channel**

Verfahren und Vorrichtung zur Anpassung der Übertragungsleistung eines Pilotkanals

Procédé et appareil pour le réglage de la puissance de transmission d'un canal pilote

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **26.08.2006 CN 200610062338**

(43) Date of publication of application:
**27.02.2008 Bulletin 2008/09**

(73) Proprietor: **Huawei Technologies Co., Ltd.**
**Shenzhen, Guangdong Province 518129 (CN)**

(72) Inventors:
• **Hu, Bo**
**Shenzhen**
**Guangdong Province 518129 (CN)**

• **Zhu, Wei**
**Shenzhen**
**Guangdong Province 518129 (CN)**
• **Zhong, Huazheng**
**Shenzhen**
**Guangdong Province 518129 (CN)**

(74) Representative: **Kreuz, Georg Maria**
**Huawei Technologies**
**Riesstrasse 25**
**80992 München (DE)**

(56) References cited:
**WO-A-03/036815    WO-A-03/094543**

## Description

The application claims the priority of China patent application No. 200610062338.5, submitted to State Intellectual Property Office of China on August 26, 2006 and entitled "A Method For Adjusting Transmission Power Of Pilot Channel".

### Field of the Invention

The present invention relates to the field of wireless communications, and particularly, to a method and apparatus for adjusting transmission power of a pilot channel in a wireless communication system.

### Background of the Invention

Code Division Multiple Access (CDMA) technology is an advanced spread spectrum wireless communication technology used in digital cellular mobile communication in recent years. This technology may satisfy the requirements of a carrier for high capacity, high performance-cost-ratio and efficient mobile communication. A CDMA network is a cellular mobile telephone network, including a number of cellular cells. The access network mainly includes a Base Station (BS) and a Base Station Controller (BSC). A transceiver provided in the base station is to communicate with user terminals within the coverage area of the base station. The base station controller is responsible for various control functions, such as network resource management, and channel switching.

A CDMA system is a self-interference system. In the system, during communication between a base station and a mobile station, it is necessary to deal with the interference from a cell itself and its neighboring cells; in addition to-link losses. Transmission powers of a base station and a mobile station should be ensured respectively in order to guarantee the communication between the base station and the mobile station. However, the transmission powers should not be too high, so as not to interfere with other subscribers. In a CDMA system, spread spectrum processing gain may be obtained by using spread spectrum and de-spread spectrum technology, so as to improve the resistibility of self-interference in the system.

In a CDMA system, the signal coverage area of a pilot channel determines the size of a cell. In general, a pilot channel can be utilized to assist a mobile station to perform channel estimation of other channels, such as synchronization channels, paging channels and traffic channels, etc.. Uniform downlink coverage radius may be formed by setting a certain power offset from the pilot channel, so that good coverage of downlink signals in the cell may be ensured. A mobile station may select a cell, reselect a cell, or be handed off to other cells by measuring and estimating the signal receiving quality of the pilot channel, so that the mobile station can initiate a service with specified communication quality.

Nowadays, when configuring pilot power, a system usually configures fixed pilot power for a cell by link budget or coverage prediction simulation, and thereby determines the coverage area of the cell. For a certain cell, because the wireless propagation environment is complicated, pilot signals from other cells may interfere with the certain cell. The link budget or coverage prediction simulation can hardly determine the power of pilot channel of a cell precisely. Because indoor propagation model is of high complexity, indoor coverage may have less accuracy on the power of a pilot channel. Accordingly, it is more difficult for link budget or coverage prediction simulation to control the power of pilot channel accurately, which may result in a too high or too low pilot power. Therefore, the coverage range of a pilot signal can hardly be controlled with high accuracy, and the telecommunication range of the mobile stations within the cell can hardly be controlled very well.

Because a CDMA system is a self-interference system, if the pilot power is set too low, the coverage range of a cell may be relatively narrow, and the communication area of a mobile station may be limited relatively narrow. In addition, the power of other channels may be set too low accordingly, so that the downlink quality of the mobile station may be decreased, and the telecommunication quality may be affected. If the pilot power is set too high, the neighboring base stations and mobile stations will be interfered, so that the communication of other users may be affected. This also leads to additional power losses and waste of system resources. Furthermore, when the wireless network environment changes, the link budget or system simulation for re-adjusting power may needs relatively large computation amount, as well as more time. As a result, the wireless network can hardly reach an optimized state quickly. The improper power setting may result in a decrease in system performance.

WO 03/036815 A1 proposes a method for controlling a network, comprising at least one cell served by a first type network device, wherein the first type network device is adapted to serve second type network devices, wherein the emission of the first type network device includes an individual pilot signal to the second type network devices, and the emission of the second type network devices includes measurement reports including information on the status and the situation of the respective device, the method comprising the steps of detecting information (S1) in the second type network devices, said information indicating the power level of the pilot signals received, collecting (S2) measurement reports (MR) from the second type network devices, said measurement reports (MR) including the pilot power information gained in the detecting step (S1), evaluating (S3) the pilot signal power coverage in that cell on the basis of a pre-given number of measurement reports (MR), automatically adjusting (S4) the pilot signal power coverage in that cell on the basis of the result of the evaluation step. The document proposes also a device for controlling a network.

**Summary of the Invention**

Embodiments of the present invention provide a method and apparatus for adjusting pilot power in a wireless communication system, so as to precisely control the power of the pilot channel within a cell, so that communication area of a mobile station may be precisely controlled.

An embodiment of the present invention provides a method for adjusting transmission power of a pilot channel. The method includes:

receiving, by a network side, a currently measured value of Received Signal Code Power, hereinafter referred to as RSCP, and value of signal-to-interference ratio, hereinafter referred to as Ec/Io, of a pilot channel reported by a mobile station;

determining, by the network side, a value of currently required transmission power of the pilot channel according to the received value of RSCP and value of Ec/Io;

adjusting, by the network side, a transmission power of the pilot channel according to the determined value of currently required transmission power of the pilot channel.

Another embodiment of the present invention provides an apparatus for adjusting transmission power of a pilot channel. The apparatus includes:

a receiving unit, configured at a network side, adapted to receive currently measured values of Received Signal Code Power, hereinafter referred to as RSCP, and signal-to-interference ratio of the pilot channel, hereinafter referred to as Ec/Io, reported by a mobile station;

a computing unit, adapted to compute and determine a value of currently required transmission power of the pilot channel according to the value of RSCP and value of Ec/Io received by the receiving unit; and

an adjusting unit, adapted to adjust transmission power of the pilot channel according to the value of currently required transmission power of the pilot channel determined by the computing unit.

In the solution for adjusting pilot power according to an embodiment of the present invention, a mobile station initiates a call test in a certain area, measures the values of received signal code power (RSCP) and Ec/Io of a pilot channel, then computes the value of transmission power of the pilot channel, and then adjusts the transmission power of the pilot channel. In this way, the transmission power of pilot channel of a base station may be determined with a relatively high accuracy, so as to control the communication area of the mobile station, and the anti-interference capability of the communication between the base station and the mobile station would be improved. Thus the communication quality of the cell determined in the movable range of the mobile station would be ensured.

**Brief Description of the Drawings**

Figure 1 is a flowchart of a method for adjusting pilot power in a wireless communication system according to an embodiment of the present invention;

Figure 2 is a schematic diagram illustrating the construction of an apparatus for adjusting pilot power according to an embodiment of the present invention.

**Detailed Description of the Embodiments**

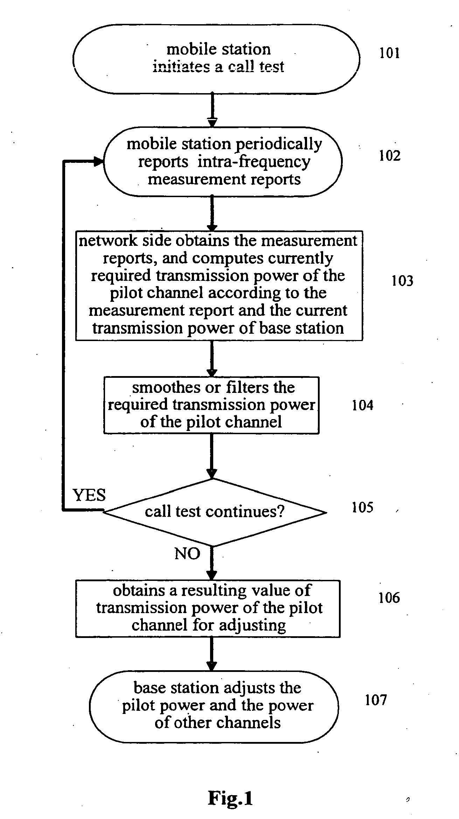

Embodiments of the present invention will be further described with Wideband Code Division Multiple Access (WCDMA) as an example. In a WCDMA system, a base station controller is referred to as an RNC, and a base station is referred to as a Node B. RNC and Node B can be referred to as network side. In this system, a pilot channel is referred to as a Common Pilot Channel (CPICH). Figure 1 shows the following process:

In step 101, a mobile station initiates a call test, and the network side sends a downlink intra-frequency measurement control command to the mobile station.

The mobile station calls a number to be tested and establishes a connection to the network side. After detecting the number to be tested, the network side may provide an automatic answer itself, or the automatic answer may be provided by some servers (e.g., call center). The network side sends a downlink intra-frequency measurement control command to the mobile station. In the WCDMA system of the present embodiment, the downlink intra-frequency measurement control command contains instruction information requiring the mobile station to report the value of Receiving Signal Code Power (RSCP) of Common Pilot Channel (CPICH) and the value of signal-to-interference ratio (Ec/Io) of the CPICH.

During the test, when the network side sends measurement control command or information to the mobile station periodically, the mobile station is required to move within a certain range, which may be the coverage range of the cell to be determined.

In step 102, the mobile station sends a measurement report to the network side.

In response to the downlink intra-frequency measurement control command sent by the network side, the mobile station measures the current CPICH RSCP and CPICH Ec/Io and sends an intra-frequency measurement report to the network side, including the values of the CPICH RSCP and CPICH Ec/Io measured currently.

During the procedure, the network side periodically sends downlink intra-frequency measurement control command to the mobile station, the mobile station periodically measures the values of the CPICH RSCP and CPICH Ec/Io, and periodically submits the measurement reports.

In step 103, the network side obtains the measurement reports, and computes the currently required transmission power of the pilot channel according to the content of the measurement report and the current transmission power of the base station.

During this process, the network side gets the current value of the CPICH RSCP and CPICH Ec/Io measured by the mobile station from the measurement report sent by the mobile station, and computes the currently required transmission power of the pilot channel according to the current transmission power of the Node B. This procedure includes the following:

1) The network side records the values of the CPICH RSCP and CPICH Ec/Io currently reported by the mobile station.

2) The network side obtains the total available transmission power of the Node B and the transmission power of the pilot channel.

3) The network side computes the currently required transmission power of the pilot channel, to make the CPICH RSCP reported by the mobile station higher than other interferences, except the downlink power, in the serving cell by a certain level, so as to satisfy the requirement of CPICH Ec/Io reported by the mobile station. A computation example is described below:

$$\text{total interference power: } Io = \text{measurement value of CPICH RSCP} / (\text{measurement value of CPICH Ec/Io})$$

$$\text{interference in serving cell: } Ior = \text{measurement value of CPICH RSCP} * (\text{current total transmission power of Node B} / \text{transmission power of pilot channel})$$

Step 2) can be substituted by the network side obtaining the percentage of load level of the current transmission power of the base station and the ratio of the pilot channel power to the total available transmission power of the base station.

Accordingly, the currently required transmission power of the pilot channel can be calculated by :

interference in serving cell:

$$\text{Ior} = \text{measurement value of CPICH RSCP} * \text{(percentage of load level of current transmission power of the base station} / \text{ratio of the pilot channel power to the total available transmission power of the base station)}$$

other interferences except the downlink power:

$$\text{Iouw} = \text{total interference power Io} - \text{interference in serving cell Ior}$$

$$\text{Value of CPICH RSCP currently required} = \text{other interferences Iouw} * \text{pilot protection margin M}$$

The pilot protection margin M is a value configured according to the physical isolation between the serving cell and the neighboring cell (e.g., penetration loss when penetrating the wall between indoor and outdoor), as well as the size of fading margin of the current environment of the wireless channel. The pilot protection margin is configured depending on the specific environment of wireless propagation.
$$\text{Currently required transmission power of the pilot channel} = \text{current transmission power of the pilot channel} * \text{(value of CPICH RSCP currently required} / \text{measured value of CPICH RSCP)}$$

According to the above computation, the currently required transmission power of the pilot channel may be obtained.
In step 104, the network side smoothes or filters the currently required transmission power of the pilot channel obtained in step 103, and records the result.
Smoothing or filtering the currently required transmission power of the pilot channel is primarily to remove the effect of short-time signal fading. Take a smoothing solution as an example:
The network side takes the minimum value among the currently required transmission powers of the pilot channel obtained in a recent period of time or obtained recent times as the smoothed value of the required transmission power of the pilot channel, and records the value of the currently required transmission power of the pilot channel obtained from the smoothing or filtering.
During this procedure, the call test is continuous. After initiating a call test, every time the mobile station reports a measurement report, the network side computes the value of currently required transmission power of the pilot channel, and compares the value of currently required transmission power of the pilot channel with the values of the currently required transmission powers of the pilot channel obtained in a recent period of time or obtained recent times, and takes the minimum value as the smoothed value of the required transmission power of the pilot channel. The recent period of time or recent times in this step may be set according to the actual test conditions. Generally, the recent period of time or recent times may be 3-10 seconds or 3-10 times. For example, the network side may compare the current measurement value with the values of the transmission powers of the pilot channel measured within 5 seconds, and take the minimum value as the smoothed value of the required transmission power of the pilot channel. Alternatively, the network side may compare the current measurement value with the values of the transmission powers of the pilot channel measured the last 5 times before this time, and take the minimum value as the smoothed value of the required transmission power of the pilot channel. Therefore, the previous computed results will be considered during the smoothing period.

In step 105, it is determined whether the call test is terminated. If the call test is terminated, the process proceeds to step 106. Otherwise, the process continues to step 102, and the mobile station executes the next measurement and measures the current values of the CPICH RSCP and CPICH Ec/Io, submitting an intra-frequency measurement report.

In step 106, the resulting transmission power of the pilot channel for adjusting is determined according to the currently required transmission power of the pilot channel obtained at step 104.

In this step, the call test initiated by the mobile station is terminated. Every time the mobile station reports a measurement report, the network side obtains the measurement report and performs corresponding computation, in order to obtain the currently required transmission power of the pilot channel. After the smoothing or filtering in step 104, the network side records a number of smoothed or filtered values of currently required transmission power of the pilot channel obtained after the smoothing and filtering. As the test location may get away from the base station, the required transmission power may be higher. Thus, the maximum value among the number of values is taken as the resulting value of the transmission power of the pilot channel for adjusting.

In step 107, the transmission power of the pilot channel is adjusted, and the transmission powers of other channels are adjusted according to the transmission power of the pilot channel.

In this step, Node B adjusts the transmission power of the pilot channel according to the resulting value of the transmission power of the pilot channel obtained in step 106, adjusting the power of other channels correspondingly according to the adjusted transmission power of the pilot channel. As a result, a good downlink coverage of the cell may be ensured.

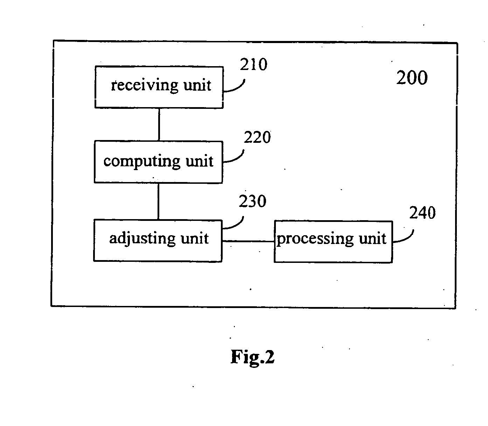

Figure 2 shows an apparatus 200 for adjusting transmission power of a pilot channel according to an embodiment of the present invention. The apparatus may include:

a receiving unit 210, arranged at network side, adapted to receive currently measured values of RSCP and Ec/Io of the pilot channel reported by a mobile station;

a computing unit 220, adapted to compute and determine the value of currently required transmission power of the pilot channel according to the values of RSCP and Ec/Io received by the receiving unit;

an adjusting unit 230, adapted to adjust the transmission power of the pilot channel according to the value of currently required transmission power of the pilot channel determined by the computing unit.

The apparatus may further include:

a processing unit 240, adapted to smooth or filter the determined currently required transmission power of the pilot channel.

The adjusting unit adjusts the transmission power of the pilot channel according to the value of currently required transmission power of the pilot channel smoothed or filtered by the processing unit.

As can be seen from the above described embodiments, a mobile station moves continuously during a call test. The values of the transmission powers of pilot channel required by the mobile station at different testing points may be obtained by corresponding computation. It may be ensured that the downlink pilot signal sent by a base station have a good coverage for the base station at different points by taking the maximum value among the values of the transmission powers of the pilot channel obtained at different testing points. In this way, the communication quality at any point within the movable range of the mobile station in the cell can be guaranteed. With the method according to the embodiments of the present invention, the transmission power of the pilot channel of a base station may be determined with more accuracy, so that the communication range of the mobile station may be better controlled. The problems resulted from the conventional link budget or coverage prediction simulation, such as communication quality being deteriorated due to a pilot power which is set too low, or additional power loss and interferences to other mobile stations being resulted from a pilot power which is set too high, may be avoided.

A person of ordinary skill in the art may appreciate that all or a portion of function modules and various steps of the above embodiments may be implemented by programs giving instructions to hardware. The programs may be stored in computer readable storage medium, such as ROM/RAM, magnetic disk, optical disk and the like. Alternatively, the function modules and various steps may be implemented by individual integrated circuit modules. Alternatively, a number of the function modules and various steps may be integrated into a single integrated circuit. In other words, the present invention is not limited to any specific hardware or software or the combination thereof.

As can be seen, with the method according to the embodiments of the present invention, the transmission power of the pilot channel of a base station may be determined with more accuracy, so that the communication range of a mobile station may be better controlled. This improves the anti-interference capability in the communication between the base station and the mobile station, and ensures the mobile station with a good communication quality in a movable range in the cell. Furthermore, the pilot channel power may be adjusted more timely and accurately. In addition, with the method according to the embodiments of the present invention, the pilot channel power may be re-adjusted depending on the changes in the wireless network environment.

The method for adjusting pilot power in a wireless communication system according to the embodiments of the present invention may be applied to a wireless communication system employing Code Division Multiple Access technologies, such as CDMA, WCDMA, CDMA2000, and the like.

While the preferred embodiments of the present invention have been described above, the scope of the present invention is not intended to be limited to these. Any of various modifications, equivalent substitutions and improvements within the spirit and scope of the present invention is intended to be encompassed in the protection scope of the present invention.

The features disclosed in the foregoing description, in the claims and/or in the accompanying drawings may, both separately and in any combination thereof, be material for realising the invention in diverse forms thereof.

**Claims**

1. A method for adjusting transmission power of a pilot channel, comprising:

   receiving, by a network side, a currently measured value of Received Signal Code Power, hereinafter referred to as RSCP, and value of signal-to-interference ratio, hereinafter referred to as Ec/Io, of a pilot channel reported by a mobile station;
   determining, by the network side, a value of currently required transmission power of the pilot channel according to the received value of RSCP and value of Ec/Io;
   adjusting, by the network side, a transmission power of the pilot channel according to the determined value of currently required transmission power of the pilot channel.

2. The method according to claim 1, **characterized in that**, before receiving by the network side the value of RSCP and the value of Ec/Io reported by the mobile station, the method further comprises:

   sending, by the network side, a downlink intra-frequency measurement control command to the mobile station after the network side detects a call test initiated by the mobile station, the downlink intra-frequency measurement control command including instruction information requiring the mobile station to report the value of RSCP and the value of Ec/Io of the pilot channel.

3. The method according to claim 2, **characterized in that**:

   the network side periodically sends a downlink intra-frequency measurement control command to the mobile station after the network side detects call test initiated by the mobile station;
   the mobile station periodically reports currently measured value of RSCP and value of Ec/Io of the pilot channel to the network side after the mobile station receives the downlink intra-frequency measurement control command.

4. The method according to any one claims of 1 to 3, **characterized in that**, said determining the value of currently required transmission power of the pilot channel comprises:

   obtaining, by the network side, the value of RSCP and the value of Ec/Io of the pilot channel currently reported by the mobile station;
   obtaining parameters including current total transmission power of a base station and transmission power of the pilot channel, or obtaining parameters including percentage of load level of current transmission power of the base station and the ratio of the transmission power of the pilot channel to the total available transmission power of the base station;
   computing currently required transmission power of the pilot channel of the base station according to the parameters obtained.

5. The method according to claim 4, **characterized in that**, said computing the currently required transmission power of the pilot channel of the base station according to the parameters obtained is performed by the following:

   total interference power: Io = measured value of RSCP / (measured value of Ec/Io);
   interference in serving cell: Ior = measured value of RSCP *(current total transmission power of the base station / transmission power of the pilot channel), or
   interference in serving cell: Ior = measured value of RSCP * (percentage of load level of current transmission power of the base station / ratio of pilot channel power to total transmission power of the base station);
   other interference: Iouw = Io - Ior;
   currently required value of RSCP = Iouw * pilot protection margin M;

currently required transmission power of the pilot channel = current transmission power of the pilot channel * ( the value of currently required RSCP / the measured value of RSCP).

6. The method according to any one of claims 1 to 5, **characterized in that**, after determining the value of currently required transmission power of the pilot channel, before adjusting the transmission power of the pilot channel, determining whether the call test is terminated:

when the call test is not terminated, receiving, by the network side, the next currently measured value of RSCP and value of Ec/Io of the pilot channel reported by the mobile station, and determining a value of currently required transmission power of the pilot channel according to the received value of RSCP and value of Ec/Io; when the call test is terminated, adjusting, by the network side, the transmission power of the pilot channel according to the determined value of the currently required transmission power of the pilot channel.

7. The method according to any one of claims 1 to 6, **characterized in that**, after determining the value of currently required transmission power of the pilot channel and before adjusting the transmission power of the pilot channel, the method further comprises:

smoothing or filtering, by the network side, the currently required transmission power of the pilot channel determined.

8. The method according to claim 7, **characterized in that**, the smoothing comprises:

comparing a currently recorded transmission power of the pilot channel with currently required transmission power of the pilot channel obtained in a recent period of time or obtained recent times, and taking minimum value of these transmission powers as value of the smoothed currently required transmission power of the pilot channel.

9. The method according to any one of claims 1 to 8, **characterized in that**, adjusting the transmission power of the pilot channel according to the determined value of the currently required transmission power of the pilot channel comprises:

taking a maximum value among a number of obtained values of currently required transmission powers of the pilot channel as a resulting value of the transmission power of the pilot channel for adjusting; adjusting, by a base station, the transmission power of the pilot channel according to the resulting value of the transmission power of the pilot channel for adjusting.

10. The method according to claim 9, **characterized in that**, further comprising:

adjusting transmission power of other channels according to the transmission power of the pilot channel after adjusting the transmission power of the pilot channel.

11. An apparatus for adjusting transmission power of a pilot channel, **characterized in that**, comprising:

a receiving unit, configured at a network side, adapted to receive currently measured values of Received Signal Code Power, hereinafter referred to as RSCP, and signal-to-interference ratio of the pilot channel, hereinafter referred to as Ec/Io, reported by a mobile station; a computing unit, adapted to compute and determine value of currently required transmission power of the pilot channel according to the values of RSCP and Ec/Io received by the receiving unit; and an adjusting unit, adapted to adjust transmission power of the pilot channel according to the value of currently required transmission power of the pilot channel determined by the computing unit.

12. The apparatus according to claim 11, **characterized in that**, further comprising:

a processing unit, adapted to smooth or filter the determined currently required transmission power of the pilot channel; the adjusting unit adjusts the transmission power of the pilot channel according to the value of currently required transmission power of the pilot channel smoothed or filtered by the processing unit.

**Patentansprüche**

1.  Verfahren zur Anpassung der Übertragungsleistung eines Pilotkanals, umfassend:

    Empfangen, durch eine Netzwerkseite, eines aktuell gemessenen Werts einer RSCP (Received Signal Code Power) und Werts eines Signal-Störleistungsverhältnisses, im Weiteren bezeichnet als Ec/Io, eines durch eine Mobilstation gemeldeten Pilotkanals;
    Bestimmen, durch die Netzwerkseite, eines Werts einer aktuell erforderlichen Übertragungsleistung des Pilotkanals gemäß dem empfangenen Wert der RSCP und Wert des Ec/Io;
    Einstellen, durch die Netzwerkseite, einer Übertragungsleistung des Pilotkanals gemäß dem bestimmten Wert der aktuell erforderlichen Übertragungsleistung des Pilotkanals.

2.  Verfahren nach Anspruch 1, **dadurch gekennzeichnet, dass** vor dem Empfangen des Werts der RSCP und des durch die Mobilstation gemeldeten Werts von Ec/Io durch die Netzwerkseite das Verfahren weiterhin Folgendes umfasst:

    Senden, durch die Netzwerkseite, eines Downlink-Intrafrequenz-Messsteuerbefehls an die Mobilstation, nachdem die Netzwerkseite einen von der Mobilstation initiierten Anruftest detektiert, wobei der Downlink-Intrafrequenz-Messsteuerbefehl Anweisungsinformationen enthält, die erfordern, dass die Mobilstation den Wert von RSCP und den Wert von Ec/Io des Pilotkanals meldet.

3.  Verfahren nach Anspruch 2, **dadurch gekennzeichnet, dass**:

    die Netzwerkseite periodisch einen Downlink-Intrafrequenz-Messsteuerbefehl an die Mobilstation sendet, nachdem die Netzwerkseite einen durch die Mobilstation initiierten Anruftest detektiert;
    die Mobilstation periodisch einen aktuell gemessenen Wert von RSCP und Wert von Ec/Io des Pilotkanals an die Netzwerkseite meldet, nachdem die Mobilstation den Downlink-Intrafrequenz-Messsteuerbefehl empfängt.

4.  Verfahren nach einem der Ansprüche 1 bis 3, **dadurch gekennzeichnet, dass** das Bestimmen des Werts der aktuell erforderlichen Übertragungsleistung des Pilotkanals Folgendes umfasst:

    Erhalten, durch die Netzwerkseite, des Werts von RSCP und des Werts von Ec/Io des aktuell von der Mobilstation gemeldeten Pilotkanals;
    Erhalten von Parametern einschließlich aktueller Gesamtübertragungsleistung einer Basisstation und Übertragungsleistung des Pilotkanals oder Erhalten von Parametern einschließlich Prozentsatz von Lastpegel der aktuellen Übertragungsleistung der Basisstation und des Verhältnisses der Übertragungsleistung des Pilotkanals zu der insgesamt verfügbaren Übertragungsleistung der Basisstation;
    Berechnen der aktuell erforderlichen Übertragungsleistung des Pilotkanals der Basisstation gemäß den erhaltenen Parametern.

5.  Verfahren nach Anspruch 4, **dadurch gekennzeichnet, dass** das Berechnen der aktuell erforderlichen Übertragungsleistung des Pilotkanals der Basisstation gemäß den erhaltenen Parametern durch Folgendes durchgeführt wird:

    Gesamtstörleistung: Io = Messwert von RSCP/(gemessener Wert von Ec/Io);
    Interferenz in der bedienenden Zelle: Ior = Messwert von RSCP * (aktuelle Gesamtübertragungsleistung der Basisstation/Übertragungsleistung des Pilotkanals) oder
    Interferenz in der bedienenden Zelle: Ior = Messwert von RSCP * (Prozentsatz des Lastpegels der aktuellen Übertragungsleistung der Basisstation/Verhältnis von Pilotkanalleistung zu Gesamtübertragungsleistung der Basisstation);
    andere Interferenz: Iouw = Io - Ior;
    aktuell erforderlicher Wert von RSCP = Iouw * Pilotschutzspielraum M;
    aktuell erforderliche Übertragungsleistung des Pilotkanals = aktuelle Übertragungsleistung des Pilotkanals * (der Wert des aktuell erforderlichen RSCP/der Messwert von RSCP).

6.  Verfahren nach einem der Ansprüche 1 bis 5, **dadurch gekennzeichnet, dass** nach dem Bestimmen des Werts der aktuell erforderlichen Übertragungsleistung des Pilotkanals, vor dem Anpassen der Übertragungsleistung des Pilotkanals, bestimmt wird, ob der Anruftest abgeschlossen ist;

wenn der Anruftest nicht abgeschlossen ist, Empfangen, durch die Netzwerkseite, des nächsten aktuell gemessenen Werts von RSCP und Werts von Ec/Io des von der Mobilstation gemeldeten Pilotkanals und Bestimmen eines Werts der aktuell erforderlichen Übertragungsleistung des Pilotkanals gemäß dem empfangenen Wert von RSCP und Wert von Ec/Io;

wenn der Anruftest abgeschlossen ist, Anpassen, durch die Netzwerkseite, der Übertragungsleistung des Pilotkanals gemäß dem bestimmten Wert der aktuell erforderlichen Übertragungsleistung des Pilotkanals.

7. Verfahren nach einem der Ansprüche 1 bis 6, **dadurch gekennzeichnet, dass** nach dem Bestimmen des Werts der aktuell erforderlichen Übertragungsleistung des Pilotkanals und vor dem Anpassen der Übertragungsleistung des Pilotkanals das Verfahren weiterhin Folgendes umfasst:

Glätten oder Filtern, durch die Netzwerkseite, der aktuell erforderlichen Übertragungsleistung des bestimmten Pilotkanals.

8. Verfahren nach Anspruch 7, **dadurch gekennzeichnet, dass** das Glätten Folgendes umfasst:

Vergleichen einer aktuell aufgezeichneten Übertragungsleistung des Pilotkanals mit aktuell erforderlicher Übertragungsleistung des Pilotkanals, in einer kürzlich vergangenen Zeitperiode oder zu kürzlich vergangenen Zeiten erhalten, und Nehmen eines Mindestwerts dieser Übertragungsleistungen als Wert der geglätteten, aktuell erforderlichen Übertragungsleistung des Pilotkanals.

9. Verfahren nach einem der Ansprüche 1 bis 8, **dadurch gekennzeichnet, dass** das Anpassen der Übertragungsleistung des Pilotkanals gemäß dem bestimmten Wert der aktuell erforderlichen Übertragungsleistung des Pilotkanals Folgendes umfasst:

Nehmen eines größten Werts unter einer Anzahl von erhaltenen Werten von aktuell erforderlichen Übertragungsleistungen des Pilotkanals als einen resultierenden Wert der Übertragungsleistung des Pilotkanals zum Anpassen;
Anpassen, durch eine Basisstation, der Übertragungsleistung des Pilotkanals gemäß dem resultierenden Wert der Übertragungsleistung des Pilotkanals zum Anpassen.

10. Verfahren nach Anspruch 9, **dadurch gekennzeichnet, dass** es weiterhin Folgendes umfasst:

Anpassen einer Übertragungsleistung von anderen Kanälen gemäß der Übertragungsleistung des Pilotkanals nach dem Anpassen der Übertragungsleistung des Pilotkanals.

11. Vorrichtung zum Anpassen einer Übertragungsleistung eines Pilotkanals, **dadurch gekennzeichnet, dass** sie Folgendes umfasst:

eine Empfangseinheit, auf einer Netzwerkseite konfiguriert, ausgelegt zum Empfangen von aktuell gemessenen Werten von RSCP (Received Signal Code Power) und eines Signal-Störleistungsverhältnisses des Pilotkanals, im Folgenden als Ec/Io bezeichnet, durch eine Mobilstation gemeldet;
eine Recheneinheit, ausgelegt zum Berechnen und Bestimmen eines Werts einer aktuell erforderlichen Übertragungsleistung des Pilotkanals gemäß den von der Empfangseinheit empfangenen Werten von RSCP und Ec/Io; und
eine Anpassungseinheit, ausgelegt zum Anpassen einer Übertragungsleistung des Pilotkanals gemäß dem Wert der aktuell erforderlichen Übertragungsleistung des Pilotkanals, durch die Berechnungseinheit bestimmt.

12. Vorrichtung nach Anspruch 11, **dadurch gekennzeichnet, dass** sie weiterhin

Folgendes umfasst: eine Verarbeitungseinheit, ausgelegt zum Glätten oder Filtern der bestimmten, aktuell erforderlichen Übertragungsleistung des Pilotkanals;
wobei die Anpassungseinheit die Übertragungseinheit des Pilotkanals gemäß dem Wert der aktuell erforderlichen Übertragungsleistung des Pilotkanals anpasst, durch die Verarbeitungseinheit geglättet oder gefiltert.

**Revendications**

1. Procédé de réglage de la puissance de transmission d'un canal pilote, comprenant :

   la réception, par un côté réseau, d'une valeur de Puissance de Code de Signal Reçue, appelée ci-après RSCP, et d'une valeur de rapport signal utile/signal brouilleur, appelée ci-après Ec/Io, actuellement mesurées d'un canal pilote indiquées par une station mobile ;
   la détermination, par le côté réseau, d'une valeur de puissance de transmission actuellement requise du canal pilote en fonction de la valeur de RSCP et de la valeur d'Ec/Io reçues ;
   le réglage, par le côté réseau, d'une puissance de transmission du canal pilote en fonction de la valeur déterminée de puissance de transmission actuellement requise du canal pilote.

2. Procédé selon la revendication 1, **caractérisé en ce qu'**il comprend en outre, avant la réception par le côté réseau de la valeur de RSCP et de la valeur d'Ec/Io indiquées par la station mobile :

   l'envoi, par le côté réseau, d'une instruction de commande de mesure intra-fréquence de liaison descendante à la station mobile après que le côté réseau détecte un test d'appel lancé par la station mobile, l'instruction de commande de mesure intra-fréquence de liaison descendante comportant des informations d'instruction demandant à la station mobile d'indiquer la valeur de RSCP et la valeur d'Ec/Io du canal pilote.

3. Procédé selon la revendication 2, **caractérisé en ce que** :

   le côté réseau envoie périodiquement une instruction de commande de mesure intra-fréquence de liaison descendante à la station mobile après que le côté réseau détecte un test d'appel lancé par la station mobile ;
   la station mobile indique périodiquement la valeur de RSCP et la valeur d'Ec/Io actuellement mesurées du canal pilote au côté réseau après que la station mobile reçoit l'instruction de commande de mesure intra-fréquence de liaison descendante.

4. Procédé selon l'une quelconque des revendications 1 à 3, **caractérisé en ce que**, ladite détermination de la valeur de puissance de transmission actuellement requise du canal pilote comprend :

   l'obtention, par le côté réseau, de la valeur de RSCP et de la valeur d'Ec/Io du canal pilote actuellement indiquées par la station mobile ;
   l'obtention de paramètres comportant une puissance de transmission totale actuelle d'une station de base et une puissance de transmission du canal pilote, ou l'obtention de paramètres comportant un pourcentage de niveau de charge de puissance de transmission actuelle de la station de base et le rapport de la puissance de transmission du canal pilote sur la puissance de transmission disponible totale de la station de base ;
   le calcul de la puissance de transmission actuellement requise du canal pilote de la station de base en fonction des paramètres obtenus.

5. Procédé selon la revendication 4, **caractérisé en ce que** ledit calcul de la puissance de transmission actuellement requise du canal pilote de la station de base en fonction des paramètres obtenus est effectué comme suit :

   puissance de brouillage totale : $Io$ = valeur mesurée de RSCP / (valeur mesurée d'Ec/Io) ;
   brouillage dans cellule de desserte : $Ior$ = valeur mesurée de RSCP * (puissance de transmission totale actuelle de la station de base / puissance de transmission dû canal pilote), ou
   brouillage dans cellule de desserte : $Ior$ = valeur mesurée de RSCP * (pourcentage de niveau de charge de puissance de transmission actuelle de la station de base / rapport de la puissance de canal pilote sur la puissance de transmission totale de la station de base) ;
   autre brouillage : $Iouw$ = $Io$ - $Ior$ ;
   valeur actuellement requise de RSCP = $Iouw$* marge de protection pilote M ;
   puissance de transmission actuellement requise du canal pilote = puissance de transmission actuelle du canal pilote * (valeur de RSCP actuellement requise / valeur mesurée de RSCP).

6. Procédé selon l'une quelconque des revendications 1 à 5, **caractérisé en ce que**, après la détermination de la valeur de la puissance de transmission actuellement requise du canal pilote, avant le réglage de la puissance de transmission du canal pilote, la détermination si le test d'appel est terminé ou non :

quand le test d'appel n'est pas terminé, la réception, par le côté réseau, de la valeur de RSCP et de la valeur d'Ec/Io actuellement mesurées suivantes du canal pilote indiquées par la station mobile, et la détermination d'une valeur de puissance de transmission actuellement requise du canal pilote en fonction de la valeur de RSCP et de la valeur d'Ec/Io reçues ;

quand le test d'appel est terminé, le réglage, par le côté réseau, de la puissance de transmission du canal pilote en fonction de la valeur déterminée de la puissance de transmission actuellement requise du canal pilote.

7.  Procédé selon l'une quelconque des revendications 1 à 6, **caractérisé en ce qu'**il comprend en outre, après la détermination de la valeur de la puissance de transmission actuellement requise du canal pilote et avant le réglage de la puissance de transmission du canal pilote :

le lissage ou le filtrage, par le côté réseau, de la puissance de transmission actuellement requise du canal pilote déterminé.

8.  Procédé selon la revendication 7, **caractérisé en ce que** le lissage comprend :

la comparaison d'une puissance de transmission actuellement enregistrée du canal pilote à une puissance de transmission actuellement requise du canal pilote obtenue au cours d'une période de temps récente ou des temps récents obtenus, et l'utilisation de la valeur minimum des ces puissances de transmission comme valeur de la puissance de transmission actuellement requise lissée du canal pilote.

9.  Procédé selon l'une quelconque des revendications 1 à 8, **caractérisé en ce que** le réglage de la puissance de transmission du canal pilote en fonction de la valeur déterminée de la puissance de transmission actuellement requise du canal pilote comprend :

l'utilisation d'une valeur maximum parmi un nombre de valeurs obtenues de puissances de transmission actuellement requises du canal pilote comme valeur résultante de la puissance de transmission du canal pilote à régler ;
le réglage, par une station de base, de la puissance de transmission du canal pilote en fonction de la valeur résultante de la puissance de transmission du canal pilote à régler.

10.  Procédé selon la revendication 9, **caractérisé en ce qu'**il comprend en outre :

le réglage de la puissance de transmission d'autres canaux en fonction de la puissance de transmission du canal pilote après le réglage de la puissance de transmission du canal pilote.

11.  Appareil de réglage de la puissance de transmission d'un canal pilote, **caractérisé en ce qu'**il comprend :

une unité de réception, configurée à un côté réseau, adaptée pour recevoir des valeurs actuellement mesurées de Puissance de Code de Signal Reçue, appelée ci-après RSCP, et de rapport signal utile/signal brouilleur, appelée ci-après Ec/Io, du canal pilote indiquées par une station mobile ;
une unité de calcul, adaptée pour calculer et déterminer une valeur de puissance de transmission actuellement requise du canal pilote en fonction des valeurs de RSCP et d'Ec/Io reçues par l'unité de réception ; et
une unité de réglage, adaptée pour régler une puissance de transmission du canal pilote en fonction de la valeur de la puissance de transmission actuellement requise du canal pilote déterminée par l'unité de calcul.

12.  Appareil selon la revendication 11, **caractérisé en ce qu'**il comprend en outre :

une unité de traitement, adaptée pour lisser ou filtrer la puissance de transmission actuellement requise déterminée du canal pilote ;
l'unité de réglage réglant la puissance de transmission du canal pilote en fonction de la valeur de la puissance de transmission actuellement requise du canal pilote lissée ou filtrée par l'unité de traitement.

```
┌─────────────────────────────────┐
│         mobile station          │   101
│      initiates a call test      │
└─────────────────────────────────┘
                 │
                 ▼
┌─────────────────────────────────┐
│     mobile station periodically │   102
│      reports  intra-frequency   │
│        measurement reports      │
└─────────────────────────────────┘
                 │
                 ▼
┌─────────────────────────────────┐
│ network side obtains the measurement │
│   reports, and computes currently    │
│ required transmission power of the   │   103
│     pilot channel according to the   │
│  measurement report and the current  │
│  transmission power of base station  │
└─────────────────────────────────┘
                 │
                 ▼
┌─────────────────────────────────┐
│        smoothes or filters the  │
│    required transmission power  │   104
│        of the pilot channel     │
└─────────────────────────────────┘
                 │
                 ▼
YES          ◇ call test continues? ◇   105
                 │
                NO
                 │
                 ▼
┌─────────────────────────────────┐
│       obtains a resulting value of   │
│    transmission power of the pilot   │   106
│         channel for adjusting        │
└─────────────────────────────────┘
                 │
                 ▼
┌─────────────────────────────────┐
│       base station adjusts the  │
│      pilot power and the power  │   107
│        of other channels        │
└─────────────────────────────────┘
```

**Fig.1**

**Fig.2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 200610062338

- WO 03036815 A1